(19) Europäisches Patentamt
European Patent Office
Office européen des brevets

(11) **EP 2 917 150 B1**

(12) **EUROPEAN PATENT SPECIFICATION**

(45) Date of publication and mention
of the grant of the patent:
**15.02.2017 Bulletin 2017/07**

(51) Int Cl.:
*C01B 3/38* (2006.01)     *C01B 3/50* (2006.01)
*C02F 1/04* (2006.01)     *C02F 9/00* (2006.01)
*B01D 71/02* (2006.01)

(21) Application number: **13829002.8**

(22) Date of filing: **08.11.2013**

(86) International application number:
**PCT/IT2013/000310**

(87) International publication number:
**WO 2014/073014 (15.05.2014 Gazette 2014/20)**

(54) **PROCESS FOR TREATING WASTE WATERS OF OLIVE OIL MILLS BY MEANS OF REFORMING REACTIONS, AND PLANT THEREFOR**

VERFAHREN ZUR AUFBEREITUNG VON ABWÄSSERN AUS OLIVENÖLMÜHLEN MITTELS REFORMIERUNGSREAKTIONEN UND ANLAGE DAFÜR

PROCÉDÉ DE TRAITEMENT DES EAUX RÉSIDUELLES DE MOULINS À HUILE D'OLIVE PAR RÉACTIONS DE REFORMAGE, ET INSTALLATION ASSOCIÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.11.2012 IT RM20120548**

(43) Date of publication of application:
**16.09.2015 Bulletin 2015/38**

(73) Proprietor: **ENEA-Agenzia Nazionale per le Nuove Tecnologie,**
**l'Energia e lo Sviluppo Economico Sostenibile**
**00196 Roma (RM) (IT)**

(72) Inventors:
 • **TOSTI, Silvano**
  **I- 00044 Frascati (RM) (IT)**
 • **SANSOVINI, Mirko**
  **I-00189 Roma (IT)**

(74) Representative: **Sarpi, Maurizio**
  **Studio Ferrario S.r.l.**
  **Via Collina, 36**
  **00187 Roma (IT)**

(56) References cited:
**WO-A1-96/30464**     **WO-A2-2009/099684**
**DE-A1- 19 829 673**

 • EKIN KPAK ET AL: "Hydrothermal gasification of olive mill wastewater as a biomass source in supercritical water", JOURNAL OF SUPERCRITICAL FLUIDS, PRA PRESS, US, vol. 57, no. 1, 8 February 2011 (2011-02-08), pages 50-57, XP028194388, ISSN: 0896-8446, DOI: 10.1016/J.SUPFLU.2011.02.006 [retrieved on 2011-02-13]
 • EKIN KPAK ET AL: "Oxidative gasification of olive mill wastewater as a biomass source in supercritical water: Effects on gasification yield and biofuel composition", JOURNAL OF SUPERCRITICAL FLUIDS, PRA PRESS, US, vol. 69, 23 May 2012 (2012-05-23), pages 57-63, XP028425061, ISSN: 0896-8446, DOI: 10.1016/J.SUPFLU.2012.05.005 [retrieved on 2012-06-01]
 • BADAWY M I ET AL: "Photocatalytic hydrogen production over nanostructured mesoporous titania from olive mill wastewater", DESALINATION, ELSEVIER, AMSTERDAM, NL, vol. 267, no. 2-3, 15 February 2011 (2011-02-15), pages 250-255, XP027567849, ISSN: 0011-9164 [retrieved on 2010-10-30]

• ENA A ET AL: "Production of bioH2 by Rhodopseudomonas palustris (strain 6A) grown in pre-treated olive mill waste, under batch or semi-continuous regime", JOURNAL OF BIOTECHNOLOGY, ELSEVIER SCIENCE PUBLISHERS, AMSTERDAM, NL, vol. 150, 1 November 2010 (2010-11-01), page 180, XP027489436, ISSN: 0168-1656, DOI: 10.1016/J.JBIOTEC.2010.08.469 [retrieved on 2010-11-01]

• ERKONAK H ET AL: "Treatment of olive mill wastewater by supercritical water oxidation", JOURNAL OF SUPERCRITICAL FLUIDS, PRA PRESS, US, vol. 46, no. 2, 1 September 2008 (2008-09-01), pages 142-148, XP023316163, ISSN: 0896-8446, DOI: 10.1016/J.SUPFLU.2008.04.006 [retrieved on 2008-05-23]

• BADAWY M I ET AL: "Enhancement of olive mill wastewater biodegradation by homogeneous and heterogeneous photocatalytic oxidation", JOURNAL OF HAZARDOUS MATERIALS, ELSEVIER, AMSTERDAM, NL, vol. 169, no. 1-3, 30 September 2009 (2009-09-30), pages 673-679, XP026282718, ISSN: 0304-3894, DOI: 10.1016/J.JHAZMAT.2009.04.038 [retrieved on 2009-04-19]

• CHOUCHENE A ET AL: "Combined process for the treatment of olive oil mill wastewater: Absorption on sawdust and combustion of the impregnated sawdust", BIORESOURCE TECHNOLOGY, ELSEVIER BV, GB, vol. 101, no. 18, 1 September 2010 (2010-09-01), pages 6962-6971, XP027072417, ISSN: 0960-8524, DOI: 10.1016/J.BIORTECH.2010.04.017 [retrieved on 2010-06-03]

• ANDRE R N ET AL: "Fluidised bed co-gasification of coal and olive oil industry wastes", FUEL, IPC SCIENCE AND TECHNOLOGY PRESS, GUILDFORD, GB, vol. 84, no. 12-13, 1 September 2005 (2005-09-01), pages 1635-1644, XP027700317, ISSN: 0016-2361 [retrieved on 2005-09-01]

**Description**

**Brief summary of the invention**

Forming the subject of the present invention is a process, and corresponding plant, for treating the waste waters of olive oil mills by means of reforming reactions in order to produce a gaseous current rich in hydrogen, $CO_2$, methane, CO, and other gases. In this way, it is possible to avoid the cost of disposal of the olive mill waste waters and moreover to produce a current of gas that can be used for energy purposes.

In a preferred variant, this process uses membrane reactors that are able to produce ultrapure hydrogen through reforming of the waste waters.

The energy consumption of the process, which mostly affects the running costs, may be considerably abated or reduced to zero by envisaging appropriate heat recovery, using heat coming from combustion of the pomaces and from combustion of the gaseous current produced by the reformer and, finally, using electrical energy obtained from the use of the gases produced by the reformer.

This process may moreover be integrated with other processes for treating the olive mill waste waters that produce waste constituted by water with fair amounts of organic compounds.

**Prior art**

1. **Waste waters from olive oil mills**

As is widely known, the by-products of the olive oil industry are mainly constituted by olive mill waste waters, pomaces, and olive kernel. On a worldwide scale the yearly production of olives is around 15 million tonnes, and that of olive oil is around 2.5 million tonnes, to which there corresponds an amount olive mill wastewater of 10-30 million cubic metres. In Italy the surface cultivated with olives is approximately 1,141,000 hectares with a yearly production of 3.79 million tonnes of olives (1998 Istat data) [1]. The yearly amounts of oil produced range between 500 and 700 thousand tonnes.

Currently, the processes for recovery and valorization of by-products deriving from processing of olives regard above all pomaces which are used for extracting second-grade oil by extraction with solvent and subsequent distillation. Said process is becoming less widespread following upon recent standards, which render marketing of pomace oil less economically advantageous. Pomaces are hence used as fuel for the production of heat (2800-3500 kcal/kg), for the production of biofuel (biogas), and, to a lesser extent, as fertilizer.

Olive mill waste waters present a high content of organic substance and are very polluting. Their composition varies a lot from case to case. Merely by way of example, appearing in Table 1 is the composition of olive mill waste waters for (traditional) pressure-extraction systems and for the continuous system (of the centrifugation type) [1]. The pH of the waste water is acidic as a consequence of the presence of organic acids. Amongst the other components of the organic substance there are sugars, fatty substances, and above all phenolic compounds, which, with their antimicrobial action, markedly reduce the biodegradability of the olive mill waste waters (BOD/COD ratio of 0.25-0.30). The amount of waste waters produced depends upon the extraction process adopted (traditional pressure system or else continuous system) and, more in particular, upon the amount of water used both by the process itself and by the centrifugal separation of the oil from the olive mill waste waters. In the traditional pressure process, during the step of centrifugal separation, water is added in an amount ranging from 10 to 40 litres per hundred kilograms of olives: the waste waters constitute approximately 45-50% of the mass of olives processed. In continuous processes, the amount of waste waters produced may vary a lot from high values (for the traditional three-step process) to lower values (in modern two-step systems).

In Table 1, the organic part is approximately 45 g/l and approximately 25 g/l in the case of the traditional process and in the case of the continuous process, respectively. The toxicity of the olive mill waste waters is also due to the content of solids and heavy metals [2, 3].

**Table 1** - Chemico-physical characteristics of wastewaters [1]

|  | Extraction system | |
| --- | --- | --- |
|  | Pressure | Centrifugation |
| pH | 5.27 | 5.23 |
| Dry extract (g l$^{-1}$) | 129.7 | 61.1 |
| Specific weight | 1.049 | 1.020 |

(continued)

| | Extraction system | |
|---|---|---|
| | Pressure | Centrifugation |
| Oil (g l$^{-1}$) | 2.26 | 5.78 |
| Reducing sugars (g l$^{-1}$) | 35.8 | 15.9 |
| Total polyphenols (g l$^{-1}$) | 6.2 | 2.7 |
| Ashes (g l$^{-1}$) | 20.1 | 6.4 |
| COD (g $O_2$ l$^{-1}$) | 146 | 85.7 |
| BOD5 (g $O_2$ l$^{-1}$)* | 90.2 | 28.7 |

In general, the processes for treating waste waters from oil mills currently studied consist in chemico-physical processes (dilution, evaporation, sedimentation, filtration, and centrifugation), biological processes (anaerobic digestion, aerobic digestion, combined biological processes, composting) and oxidation processes [4, 5]. For example, some recent applications of olive mill waste waters regard the treatment in anaerobic-digestion plants for the production of biogases. In the process patented by STC (Science Technology Consulting srl), based in Brindisi, the wastewaters are treated for extracting the biogas and the phenolic fraction, which is recovered and valorized for uses in the nutraceutical and pharmaceutical sectors.

Another study has regarded a process of anaerobic digestion through a bioreactor for the production of methane [6]. The study has highlighted the greater effectiveness of processes with dilution of wastewaters without removal of solids. However, the applications with bioreactors regard small-scale plants and are limited by the toxic effects of the compounds present in the wastewaters as compared to treatments using micro-organisms [7].

A recent patent filed in name of the present applicant, which regards the treatment of olive mill waste waters, is based upon the use of separation technologies by means of membranes. Filtration processes are applied, which enable recovery of the polyphenolic molecules, such as hydroxytyrosol, with a high degree of purity with no contamination from organic solvents or other chemical substances [8]. Furthermore, the concentrated residue present in the retentate of this process can be used for the production of fertilizers and possibly biogas, whilst there is obtained as by-product also a highly purified aqueous current that can be used as base for beverages. Ekin Kipçak et al. in The Journal of Supercritical Fluids volume 57 (2011), pages 50-57 and volume 69 (2012), pages 57-63 disclose the gasification of olive mill waste waters as biomass source in supercritical water.

In practice, in Italy, for the most part, the olive mill waste waters are spread on the land and only in part are treated in depuration plants. Spreading on the land is regulated by the Act No. 574 of November 11, 1996, containing standards regarding the agronomic use of olive mill and of waste from oil mills, and by the Ministerial Decree of July 6, 2005 that establishes the criteria and general technical standards for the agronomic utilization of waste waters and of damp pomaces. According to this law, the damp pomaces and the waste waters resulting from mechanical processing of olives that have not undergone any treatment or received any additive may be used for agronomic purposes through controlled spreading on agricultural land. The amounts of wastewaters that can be released over the period of one year range from 50 m$^3$ ha$^{-1}$ (for waters from traditional oil mills) to 80 m$^3$ ha$^{-1}$ (in the case of continuous-cycle oil mills). The cost of spreading has been estimated at between 3 and 5 €/m$^3$ [9].

To sum up, the main advantages of spreading on the land are represented by the low cost (and by the costs avoided for depuration and other treatments) and by the fertilizing (and herbicidal) effect, while among the negative aspects there may be highlighted the cytotoxicity are the risk of pollution of aquifers (and/or rilling) and the difficulty in observing the relevant norms [10].

**2. Production of hydrogen by reforming reactions**

At a world level, the majority of hydrogen is produced starting from hydrocarbons through three main processes: steam reforming, partial oxidation, and autothermal steam reforming.

The general reaction for steam reforming of a hydrocarbon is markedly endothermic and is given by $C_nH_m$ + n $H_2O \Leftrightarrow$ n CO + (n+m/2) $H_2$

$$\Delta H_{298K} > 0 \qquad\qquad (1)$$

whereas for partial oxidation, which is an exothermic reaction, we have

$$C_nH_m + n/2\ O_2 \Leftrightarrow n\ CO + m/2\ H_2$$

$$\Delta H_{298K} < 0 \qquad\qquad (2)$$

Oxidative reforming results from a combination of the two previous reactions (steam reforming and partial oxidation) and has the purpose of reducing the amount of heat necessary to sustain the reaction. When oxidative reforming is conducted in such a way as to operate with enthalpic exchange close to zero, it is referred to as "autothermal". The reforming reactions can be conducted also with alcohols (for example, methanol, ethanol) and other organic compounds (for example, acetic acid): in these cases, the stoichiometry of the reactions (1) and (2) must be appropriately modified.

All the processes set forth above are completed by the conversion of CO into $CO_2$ through the water-gas shift reaction, which produces further hydrogen

$$CO + H_2O \Leftrightarrow CO_2 + H_2 \qquad \Delta H_{298K} = -41.4\ kJ\ mol^{-1}\ (3)$$

Basically, through a combination of the reactions set forth above, one or more hydrocarbons and/or alcohols react with water vapour to produce principally hydrogen and carbon dioxide. Other secondary reactions can lead to the formation of by-products, such as mainly methane. Finally, these reactions envisage purification of the hydrogen produced through separation processes, such as, for example, pressure-swing adsorption (PSA).

Steam reforming of methane is currently a process widely used and supplies approximately 70% of the hydrogen produced at a world level

$$CH_4 + H_2O \Leftrightarrow CO + 3\ H_2 \qquad \Delta H_{298K} = 206\ kJ\ mol^{-1}\ (4)$$

Also in this case the water-gas shift reaction is carried out to complete conversion of CO into $CO_2$, thus obtaining the global reaction

$$CH_4 + 2\ H_2O \Leftrightarrow CO_2 + 4\ H_2 \qquad \Delta H_{298K} = 164.6\ kJ\ mol^{-1}\ (5)$$

Also in this case, by combining with partial oxidation, it is possible to operate with a $\Delta H\ 298K \approx 0$: an example of reaction that approaches autothermal conditions is, for example,

$$3\ CH_4 + O_2 + 4\ H_2O = 3\ CO_2 + 10\ H_2 \quad \Delta H_{298\ K} = 11\ kJ\ mol^{-1}\ (6)$$

In general, the processes of steam reforming and autothermal reforming are conducted with an excess of water with respect to the stoichiometric values in order to increase the reaction yields and reduce the formation of carbon, which reduces the stability of the catalysts.

## 3. Membrane reformers

In the applicant's Frascati laboratories, a technology of production of membranes for separation of ultrapure hydrogen has been developed. These membranes constituted by pipes made of Pd-Ag alloy selectively permeable to hydrogen have been characterized in long-duration tests showing high permeation flows and excellent stability [11-14]. The same membranes have been used for producing membrane reactors, which are devices that are able to carry out simultaneously a reaction of dehydrogenation and separation of the hydrogen produced. The simultaneous subtraction of one of the products of reaction through the membrane enables shifting of the equilibrium of reaction towards the right and obtaining reaction conversions higher than those of traditional reactors (not membrane reactors) that operate in the same pressure and temperature conditions (the so-called "shift effect" of the membrane). In particular, in membrane reactors the reaction conversions may even exceed the values of thermodynamic equilibrium. Numerous processes that use ENEA membranes have been studied and developed for the production of ultrapure hydrogen by means of reforming of methane, ethanol, acetic acid, etc. [15-18].

In the light of the prior art and of the experience acquired, the present applicant has recognized the need to provide a unitary solution to two problems: avoiding the costs of disposal of olive mill waste waters of oil mills; and producing a gaseous current rich in hydrogen, $CO_2$, methane, CO, and other gases, which can be used for energy purposes.

**Task of the invention**

Following upon research carried out at ENEA's Frascati laboratories, it has been surprisingly discovered that olive mill waste waters, if appropriately pretreated, can be used in reforming reactions, obtaining the dual advantage of reducing the environmental impact of olive processing and of producing a gaseous mixture rich in hydrogen.

There has moreover been developed, as a particular case, the use of special reformers that employ membranes made of Pd alloy, which are able to increase further the yields in hydrogen as compared to traditional reactors and to obtain ultrapure hydrogen without any need for further depuration treatment.

**General description of the invention**

The present invention discloses a process and a plant for treating olive mill waste waters according to any of claims 1 to 14.

The specific characteristics of the process will be more readily understood with reference to the attached plates of drawings, which illustrate, purely by way of non-limiting example, some preferred embodiments. In the plates:

Figure 1 is a general block diagram of the process of disposal of wastewaters from olive oil mills with the production of a gaseous current rich in hydrogen, according to the invention;
Figure 2 is a block diagram of the process of disposal of wastewaters from olive oil mills in the case of methane reforming;
Figure 3 is a general block diagram of the process of disposal of wastewaters from olive oil mills with the production of hydrogen by means of reforming reactions with the use of a membrane reactor;
Figure 4 is a block diagram of the process of disposal of wastewaters from olive oil mills in the particular case of reforming of methane with the use of a membrane reactor;
Figure 5 is a schematic representation of the membrane reactor used for the tests of steam reforming of olive mill waste waters; and
Figure 6 is a block diagram of the process of disposal of wastewaters from olive oil mills by steam reforming, with the use of a boiler for combustion of the pomaces.

As has already been noted, the waste waters of olive oil mills contain an organic component constituted principally by oils, sugars, and polyphenols. In practice, it is a mixture of water with organic compounds, which, appropriately treated with the purpose of eliminating the fixed residue and part of the water, can be used for feeding a reformer, with the dual advantage of avoiding disposal of the waste waters of oil mills and of producing a gaseous mixture rich in hydrogen.

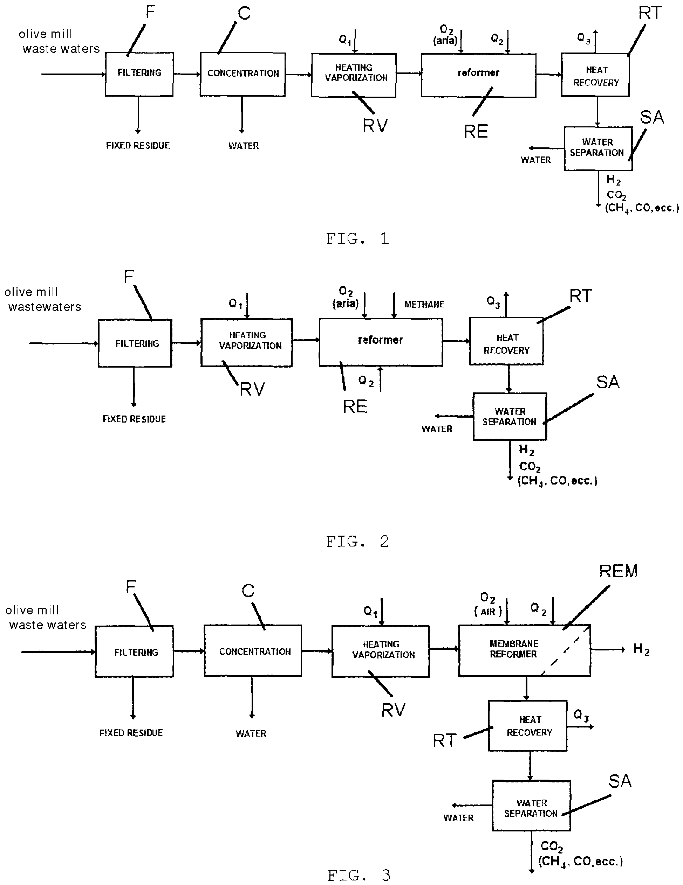

The new process, in the more general form, is described schematically in Figure 1.

The olive mill waste waters are first treated with the purpose of eliminating the fixed residue (for example, via filtration F) and part of the water (in a concentration stage C).

According to a characteristic of the invention, this concentration process must take into account the amount of water present in the olive mill waste waters (this amount depending principally upon the milling process used) and the value of excess of water with respect to the stoichiometric values to be used in the reforming process (this value depending upon the characteristics of the catalyst used, the reaction yields required, and the other operating conditions, such as, for example, reaction pressure and temperature). In general, the excess of water with respect to the stoichiometric values has a positive effect both on the thermodynamics and on the kinetics of the reaction and thus enables an increase of the yield in hydrogen of the reforming process. In fact, the excess of water enables both an increase in the reaction conversion according to le Chatelier's principle (excess of one of the reagents) and a reduction, or even prevention, of formation of carbon on the catalyst (positively affecting the speed of reaction). However, the excess of water increases the amount of heat necessary for vaporization of the supply current to the reformer and hence could reduce the energy yield of the process. Accordingly, the value of excess of water applied in reforming processes is determined according to the optimization of the criteria set forth above (yield in hydrogen, energy yield, duration of the catalyst and of its possible regeneration cycles, etc.) [19]. Hence, reformers can be supplied with diluted aqueous solutions: this means that, in the reforming processes, it is not necessary to carry out a marked concentration of the waste waters of olive oil mills. For example, the waste waters of the mills of a pressure type present an amount of organic compounds of approximately 50 g/l (see Table 1), whilst the steam reforming can be conducted effectively with supply currents having an organic fraction of approximately 100 g/l, as shown in the experimental activities appearing hereinafter in EXAMPLE 1. In this case, the waste waters used have been concentrated by approximately 50%.

Hence, the waste waters thus treated are heated and vaporized (for this operation RV an amount of heat $Q_1$ is required) before being sent into the reformer RE. This preferably consists of a reactor with catalytic bed and operates for the reactions of steam reforming or oxidative (autothermal) reforming, together with the water-gas shift reaction.

The reactions that take place in the reformer RE are those indicated by expressions (1-3) in the case of hydrocarbons or else the same expressions appropriately modified for the case of reforming of other organic compounds.

In the case of steam reforming (endothermic process), it is necessary to supply the reaction heat $Q_2$, whereas in the case of autothermal reforming no thermal exchange in the reformer becomes necessary. In the case of autothermal reforming, however, the addition of air (or oxygen) to the reformer RE becomes necessary.

The current leaving the reformer is cooled, with recovery of the heat $Q_3$ (operation RT): in fact, the reforming reactor operates at a high temperature (500-800°C). Instead, the subsequent process of separation of the water (for example, via condensation) (operation SA) occurs at lower temperatures. Together with the water, other condensable liquid compounds coming from the reforming reactions can be separated.

The gaseous current separated from the water is principally made up of hydrogen and $CO_2$, whereas methane (by-product of parallel reactions) and CO may be present in variable amounts.

Finally, the hydrogen can be separated from the other compounds (principally $CO_2$, methane, and CO) through the process of pressure-swing adsorption (PSA) or membrane processes.

### Reforming of methane

In a variant to the general process described previously, illustrated in Figure the olive mill waste waters can be used for carrying out the operation of methane reforming, as appears in the block diagram of Figure 2.

As indicated in the introduction, the majority of the hydrogen currently produced (approximately, 70%) is obtained from methane-reforming reactions.

The main reactions that take place are those described by expressions (4-6): in this case, however, the reaction water is constituted by the wastewaters themselves, which also contain a part of organic compounds that in turn contribute to the reforming reactions according to expressions (1-3) and their modifications. In this way, as compared to the case of a methane-reforming process conducted with pure water, a greater amount of hydrogen is produced (which comes from the reforming of the organic fraction contained in the olive mill waste waters). Furthermore, as compared to the general case of Figure 1, it is not necessary to concentrate the wastewaters, which will thus be sent into the reformer immediately after filtration. In detail, the block diagram of Figure 2 differs from the general case described previously in that the reformer RE is supplied with methane and with the olive mill waste waters (in addition possibly to air or oxygen in the case of autothermal reforming), the concentration process C not being necessary.

### Use of dense metal membranes

The technological development in the field of membranes has rendered widespread the use of these devices in the separation processes. As mentioned in the introduction, at ENEA's Frascati laboratories, technologies for the production of dense metal membranes have been developed that are capable of selectively separating hydrogen from mixtures in the gaseous phase. An important application of the membranes consists of the construction of membrane reactors, devices that integrate a membrane with a chemical reactor. Membrane reactors reduce the number of process apparatuses (a single apparatus replaces the reactor and the separator) and enable operation with reaction yields higher than those of traditional reactors: thus, the costs are reduced by increasing efficiency and reliability.

In the case of reforming processes, it has been shown that membrane reactors that use permeators made of palladium alloy can operate at temperatures significantly lower than those of traditional reactors, in any case achieving high reaction yields.

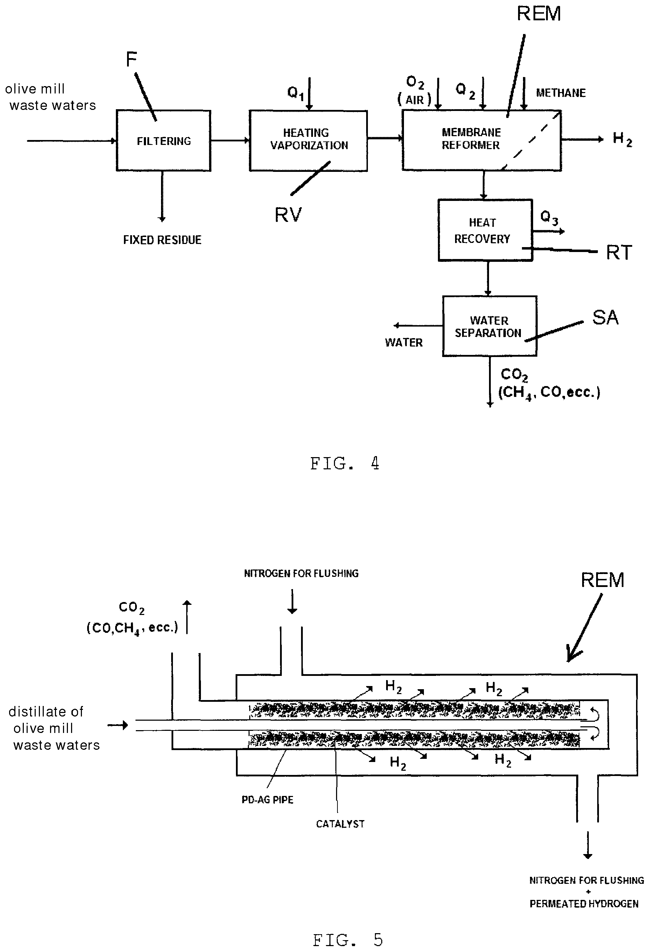

In this perspective, the two processes for treating wastewaters described above (general process and the methane-reforming process) may be modified by bringing about reforming in a membrane reactor that carries out simultaneously the reactions of reforming and separation of the hydrogen produced. The use of a membrane reactor REM for treating wastewaters through the general process and through the methane-reforming process is described in the block diagrams of Figure 3 and 4, respectively.

### EXAMPLE 1

Illustrated hereinafter are some experimental results obtained at ENEA's Frascati laboratories, where tests of reforming of wastewaters from olive oil mills have been conducted through the use of a membrane reactor according to the block diagram of Figure 3.

The wastewaters used in this study came from an oil mill of a traditional pressure type present in the township of Frascati and were collected in October 2011.

### 1. Filtration

Before being subjected to reforming the olive mill waste waters were filtered in the laboratory: after this operation, the waters presented a pH of 4.7 and a density of 1.005 g cm$^{-3}$

### 2. Concentration by distillation

After filtration, the olive mill waste waters were concentrated by distillation conducted at atmospheric pressure and in the temperature range of 250-325°C. Distillation enabled separation of approximately 50% as distillate, whilst the remaining 50% was constituted by a very dense liquid residue (approximately 10% of the total) and by the losses due to evaporation (approximately 40% of the total). To a first approximation, we can estimate that, in the sample treated in the laboratory by means of distillation, the concentration of organic fraction passed from approximately 50 g/l (since the olive mill waste waters in question came from a pressure plant) to approximately 100 g/l, namely, approximately 10 wt%.

### 3. Reforming in membrane reactor

The distillate thus obtained was used as current for supply to the membrane reactor described in the block diagram of Figure 4. This membrane reactor was constituted by a pipe made of Pd-Ag alloy (with 20-25 wt% of silver) having a diameter of 10 mm, a length of 143.7 mm, and a wall thickness of 0.150 mm. The permeator pipe was filled with 10 g of catalyst BASF SP-01 T (1.5 mm x 1.5 mm) with a Pt base.

The distillate of the waste waters was vaporized and then supplied in the lumen of the permeator pipe that housed the Pt-based catalyst. Here, the reforming reactions take place, which produce hydrogen that permeates selectively through the permeator pipe and is collected in the shell of the membrane reactor, where it is gathered by a flushing nitrogen current.

The operating conditions of the tests conducted were the following:

- reaction temperature: 450°C,
- vaporization temperature: 250°C,
- reaction pressure : 100-500 kPa,
- pressure in the shell of the reactor: 100 kPa,
- rate of supply constituted by 10 g/l of distillate obtained as described above and by 50 Ncm$^3$/min of nitrogen used as carrier gas,
- flowrate of nitrogen for flushing in the shell of the reactor: 500 Ncm$^3$/min.

The tests carried out at ENEA's Frascati laboratories highlighted that the amount of hydrogen produced and collected in the shell of the reactor increases as the reaction pressure increases. In particular, operating at the pressure of 500 kPa, approximately 6 Ncm$^3$/min of hydrogen were produced at a supply rate of 10 g/h.

In general, we can state that this process is able to extract 36 Nm$^3$ of ultrapure hydrogen starting from 1 m$^3$ of wastewaters previously distilled, with a yield of approximately 50%, as described above. In other words, from 1 m$^3$ of waste waters it is possible to obtain approximately 18 Nm$^3$ of hydrogen.

The process described can be applied directly to all oil mills, both to medium-to-small-scale mills and to industrial-scale mills.

### 4. Plant for treating olive mill waste waters with boiler for combustion of pomaces

According to a further characteristic of the invention, as has been said previously, energy consumption of the process, which mostly affects running costs, can be considerably abated or reduced to zero by envisaging appropriate heat recovery, using in particular heat coming from combustion of the pomaces.

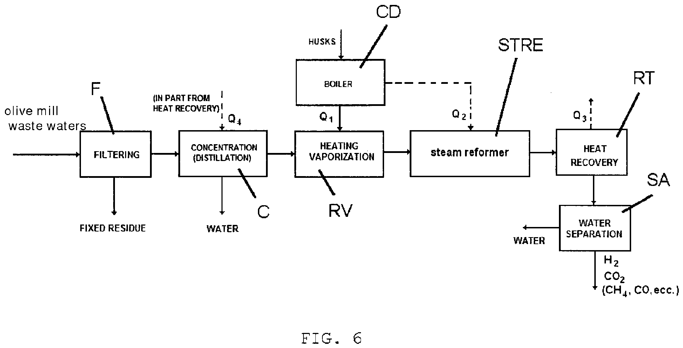

With reference to Figure 6, described hereinafter is a plant for treating waste waters that is equipped with a boiler for the combustion of pomaces.

Taken into consideration by way of illustration herein is an olive-milling plant of the traditional (pressure) type of medium-to-small dimensions (i.e., able of treat 2000 kg/h of olives). It is assumed that approximately 20 kg of oil, 50 1 of wastewaters, and 30 kg of pomaces are produced for 100 kg of olives milled.

In this example, the waste waters were treated by steam reforming (stage STRE), according to the block diagram of Figure 6. In this diagram, as compared to the general diagram of Figure 1, there is no supply of oxygen (air) to the reformer, since in this case it is a steam-reforming process, and, moreover, it is envisaged that heating and vaporization of the waste waters are conducted using the heat coming from combustion of the pomaces in an appropriate boiler CD. In this way, the process proposed does not present significant energy consumption levels.

The hypothesis of using combustion of pomaces can be verified with a simple thermal balance that refers to treatment of 100 kg of olives. For heating from room temperature to 500°C and subsequent vaporization of 50 l of waste waters, approximately 54 000 kcal are necessary ($Q_1$). Assuming for 30 kg of pomaces a calorific value of 3000 kcal/kg and an efficiency in combustion thereof of 80%, it is possible to calculate an amount of heat obtained of 72 000 kcal. The excess heat (18000 kcal) may be used, for example, to supply part of the heat ($Q_2$) necessary for the steam-reforming reaction (which is markedly endothermic), whilst the recovery of heat ($Q_3$) at output from the reformer STRE can be used, also in part, for the process of concentration conducted via distillation ($Q_4$).

## Integration with other processes and further optimizations

The processes proposed may also be used for treating olive mill waste waters that have already been treated at other plants. An example may be constituted by the integration with the process forming the subject of the patent No. 1.351.673 (Inventors: Pizzichini and Russo) [8], which uses membrane filtration systems for recovering phenols from the waste waters of olive oil mills. The retentate currents of the Pizzichini-Russo process still contain an organic fraction that can be treated according to the process schemes set forth in the present invention.

An integrated system obtained by combining the Pizzichini-Russo process with one of the processes described in this patent application would enable both recovery of the valuable phenolic compounds and complete abatement of the waste waters, with production of a mixture of fuel gases rich in hydrogen. In addition, as further optimization of the process schemes illustrated in Figures 1 and 2, the use of the current of fuel gases rich in hydrogen may be proposed to supply (even partially) heat necessary for the other process equipment, thus rendering these processes completely self-sufficient from the energy standpoint and hence reducing the running costs.

In the case of use of membrane reactors (diagrams of Figure 3 and 4), the fraction of the gases separated from hydrogen (principally methane and CO) can be used to supply (even only in part) the heat necessary for the other process apparatuses.

Finally, the gaseous current produced by the reforming reactions can be used for producing electrical energy through thermal engines and alternators or else, in the case of use of membrane reformers that produce ultrapure hydrogen, the electrical energy can be produced with high yields by means of fuel cells of a polymeric type.

From the foregoing description and taking into account that the amounts of olive mill waste waters produced annually at a world level are of the order of 10-30 million cubic metres (the Italian market represents approximately one quarter of the world market), it may be appreciated how the process according to the invention is able to achieve the following targets successfully:

it enables abatement of the olive mill waste waters that are very polluting, and production of a current of fuel gases that can be used for producing heat or electrical energy;

the yield of the process in terms of fuel gases produced or in terms of heat or electrical energy made available depends upon the quality of the olive mill waste waters available (i.e., the concentration of water and organic compounds), upon the type of reforming process envisaged (steam reforming or oxidative/autothermal reforming), and upon the heat recovery envisaged between the various steps of the process itself;

it uses components and technologies that are extensively applied and that present contained costs: hence, the construction costs can be considered as not being high;

in any case, since said running costs are linked above all to the energy consumption levels, they can be reduced or eliminated altogether by envisaging appropriate heat-recovery processes, using heat coming from the combustion of pomaces and from the combustion of the gaseous current produced by the reformer and, finally, using the electrical energy produced by employing the gases produced by the reformer in thermal engines and alternators;

by utilizing membrane reformers that enable production of ultrapure hydrogen, in addition to a gaseous current rich in $CO_2$, methane, CO, and other gases to a lesser extent, laboratory tests have shown the possibility of producing approximately 18 $Nm^3$ of ultrapure hydrogen per cubic metre of olive mill waste waters; considering a price of hydrogen of 3 €/kg, there is obtained a value of hydrogen produced of 4 € per cubic metre of olive mill waste waters, to which there is to be added approximately a further 4 € per cubic metre of olive mill waters as costs avoided for spreading on the land; globally, this process in its present embodiment enables a gain of approximately 8 € per cubic metre of olive mill waste waters, as sum of the gains deriving from the hydrogen produced and the costs avoided; and

References

[1] E. Bonari; N. Silvestri, L. Ercoli, Acque di vegetazione dei frantoi oleari, Utilizzazione agronomica dei reflui agro-alimentari (Waste waters of oil mills, Agronomic use of waste coming from the agricultural and foodstuff industry) - ETS, (2008), pp. 65-80 (2008)

[2] C. Amaral, M.S. Lucas, J. Coutinho, A.L. Crespi, M.dR. Anjos, C. Pais, Microbiological and physicochemical characterization of olive mill wastewaters from a continuous olive mill in Northeastern Portugal, Bioresource Technology 99 (2008), pp. 7215-7223

[3] A. Coz, M. Villegas, A. Andres, J.R. Viguri, D. Mantzavinos and N.P. Xekoukoulotakis, Management scenarios for olive oil mill waste based on characterization and leaching tests, J. Chem. Technol. Biotechnol. (2011) (wileyonlinelibrary.com) DOI 10.1002/jctb.2677

[4] P. Paraskeva and E. Diamadopoulos, Technologies for olive mill wastewater (OMW) treatment: a review, J. Chem. Technol. Biotechnol. 81: 1475-1485 (2006) M. Hamdi, J. L. Garcia and R. Ellouz, Integrated biological process for olive mill wastewater treatment, Bioprocess Engineering 8 (1992), pp. 79-84

[5] M. Taccari, Utilizzazione dei Reflui Oleari Bioconversioni mediante Fermentazione e Compostaggio di Acque di Vegetazione per la produzione di Bio-Fertilizzanti (Use of Oil Waste - Bioconversions by Fermentation and Composting of Waste Waters for the Production of Bio-Fertilizers), Doctorate Thesis (2008), Università Politecnica delle Marche

[6] P.S. Blika, K. Stamatelatou, M. Kornados, G. Lyberatos, Anaerobic digestion of olive mill wastewater, Global NEST Journal, Vol. 11, No. 3, pp. 364-372, 2009

[7] C.C. Anastasiou, P. Christou, A. Michael; D. Nicolaides and T.P. Lambrou, Approaches to Olive Mill Wastewater Treatment and Disposal in Cyprus, Environmental Research Journal 5 (2): 49-58, 2011

[8] M. Pizzichini, C. Russo, Procedimento di Recupero Integrale di Componenti Chimiche delle Acque di Vegetazione con Tecnologie di Membrana (*Process for Integral Recovery of Chemical Components of Waste Waters using Membrane Technologies*), Patent No. 1,351,673 - June 16, 2004 ccc

[9] A. Chiesura, Verso la sostenibilita di filiera: recupero e valorizzazione dei reflui oleari (Towards supply-chain sustainability: recovery and valorization of oil wastes), L'Officina GBS Soc. Cooperativa, Study funded by Unasco, Reg. (CE) 1331/2004 - Settore 1: Sorveglianza e gestione amministrativa del settore e del mercato dell'olio d'oliva e delle olive da tavola - 1.b Studi di fattibilita (Sector 1: Surveillance and administrative management of the sector and market of olive oil and table olives - 1.b Feasability studies)

[10] L.R. N. 37/99: Usi economicamente sostenibili degli scarti e dei sottoprodotti della lavorazione delle olive - Seconda Relazione sull'attivita svolta e risultati ottenuti I anno di progetto (giugno 2007 / maggio 2008) (Economically sustainable uses of waste and by-products of olive processing - Second Report on activity carried out and results obtained - 1st year of project (June 2007 / May 2008)), Università Politecnica delle Marche

[11] S. Tosti, L. Bettinali, D. Lecci, F. Marini, V. Violante, Method of bonding thin foils made of metal alloys selectively permeable to hydrogen, particularly providing membrane devices, and apparatus for carrying out the same, European Patent No. EP 1184125 (European patent application No. 01830465.9 of July 12, 2001, intention to grant March 22, 2012)

[12] S. Tosti, A. Basile, D. Lecci, C. Rizzello, Membrane process for hydrogen production from reforming of organic products, such as hydrocarbons or alcohols, European Patent No. EP1829821

[13] S. Tosti, A. Basile, L. Bettinali, D. Lecci, C. Rizzello, Dispositivo a membrana a fascio tubiero per la produzione di idrogeno ultrapuro (*Tube-nest membrane device for the production of ultrapure hydrogen),* Patent application for industrial invention No. RM2005A000399 of July 26, 2005 - Patent certificate No. 00013359558 of March 24, 2009

[14] S. Tosti, A. Basile, L. Bettinali, F. Borgognoni, F. Chiaravalloti, F. Gallucci, Long-term tests of Pd-Ag thin wall permeator tube, Journal of Membrane Science 284 (2006), pp. 393-397

[15] S. Tosti, A. Basile, F. Borgognoni, V. Capaldo, S. Cordiner, S. Di Cave, F. Gallucci, C. Rizzello, A. Santucci, E. Traversa, Low temperature ethanol steam reforming in a Pd-Ag membrane reactor - Part 1: Ru-based catalyst, Journal of Membrane Science 308 (2008), pp. 250-257

[16] S. Tosti, A. Basile, F. Borgognoni, V. Capaldo, S. Cordiner, S. Di Cave, F. Gallucci, C. Rizzello, A. Santucci, E. Traversa, Low-temperature ethanol steam reforming in a Pd-Ag membrane reactor - Part 2. Pt-based and Ni-based catalysts and general comparison, Journal of Membrane Science 308 (2008), pp. 258-263

[17] S. Tosti, A. Basile, L. Bettinali, F. Borgognoni, F. Gallucci, C. Rizzello, Design and process study of Pd membrane reactors, International Journal of Hydrogen Energy 33 (2008), pp. 5098-5105

[18] S. Tosti, Overview of Pd-based membranes for producing pure hydrogen and state of art at ENEA laboratories, International Journal of Hydrogen Energy 35 (2010), pp. 12650-12659

[19] Diogo Mendes, Silvano Tosti, Fabio Borgognoni, Adélio Mendes, Luis M. Madeira, Integrated analysis of a membrane-based process for hydrogen production from ethanol steam reforming, Catalysis Today 156 (2010), pp. 107-117

**Claims**

1. A process for treating waste waters of olive oil mills, **characterized in that** it comprises the following steps:

    - filtering of the waste waters for removal of the fixed residue;
    - concentration of the waste waters thus treated to eliminate part of the water present;
    - heating and evaporation of the waste waters thus treated;
    - reforming on a catalytic-bed reformer of said waste waters;
    - separation via condensation of the water from the current leaving the reformer; and
    - possible heat recovery;

    obtaining at output a gaseous current constituted by hydrogen, $CO_2$, methane, CO, and other compounds.

2. The process as per Claim 1, **characterized in that** the reforming reactions take place in a membrane reformer that carries out simultaneously the reforming reactions and the separation of the hydrogen produced, thereby obtaining, after separation via condensation of the water from the current leaving the reformer, a hydrogen-free gaseous current.

3. The process as per Claim 2, **characterized in that** said membrane reactor uses dense metal membranes capable of selectively separating hydrogen from mixtures in the gaseous phase.

4. The process for treating waste waters of olive oil mills as per Claim 1, **characterized in that** the reforming reactions take place in a reformer supplied by methane, where the reaction water is constituted by the waste waters themselves that are sent to the reformer immediately after filtration, the operation of concentration not being necessary.

5. The process as to the preceding claims, **characterized in that** it envisages the use of a boiler for the combustion of the pomaces produced by the oil mill in order to integrate the heat thus produced in the heat-recovery stages of the process.

6. The process as per Claim 5, **characterized in that** the heat produced by the combustion of the pomaces is used for heating and vaporization of the waste waters and also partially to sustain the reforming reaction in the case of steam reforming and for the step of concentration of the waste waters.

7. The process as per Claim 1, **characterized in that** the gaseous current constituted by hydrogen, $CO_2$, methane, CO, and other compounds is used to supply heat to the process equipment.

8. The process as per Claim 1, **characterized in that** the gaseous current constituted by hydrogen, $CO_2$, methane, CO, and other compounds is used for producing electrical energy.

9. The process as per Claim 2, **characterized in that** the gaseous current constituted by $CO_2$, methane, CO, and other compounds is used to supply heat to the process equipment.

10. The process as per Claim 2, **characterized in that** the gaseous current constituted by $CO_2$, methane, CO, and other compounds is used for producing electrical energy.

11. The process as to any one of the preceding claims, **characterized in that** the waste waters usable as supply current is constituted by waste waters already treated according to other processes.

12. A plant for treating waste waters of olive oil mills, **characterized in that** it comprises:

    a station for filtering the waste waters for removal of the fixed residue;
    an apparatus for concentration of the waste waters, once filtered, in order to obtain an aqueous solution with concentrated organic fraction usable as supply current;
    a device for heating and vaporizing said supply current;
    a reactor with catalytic bed that carries out reactions of steam reforming or oxidative reforming together with the water-gas-shift reaction;
a heat exchanger for recovering the heat of the gaseous current leaving the catalytic-bed reactor; and
a condensation apparatus for separating the water from the gaseous current leaving the heat exchanger.

13. The plant for treating waste waters of olive oil mills as per Claim 12, **characterized in that**, when the catalytic-bed reactor is replaced by a membrane reactor, said plant comprises:

a station for filtering the waste waters for removal of the fixed residue;
an apparatus for concentration of the waste waters, once filtered, in order to obtain an aqueous solution with concentrated organic fraction usable as supply current;
a device for vaporizing said supply current;
said membrane reactor, which carries out simultaneously the reforming reactions and the separation of the hydrogen produced;
a heat exchanger for recovering the heat of the hydrogen-free gaseous current leaving the membrane reactor; and
a condensation apparatus for separating the water from the gaseous current leaving the heat exchanger.

14. The plant for treating waste waters of olive oil mills as per Claim 12, **characterized in that**, in the case where the reforming of methane takes place in the catalytic-bed reactor, means are provided to send the waste waters directly to the reformer after the filtering station.


**Patentansprüche**

1. Verfahren zur Aufbereitung von Abwässern aus Olivenölmühlen, **dadurch gekennzeichnet, dass** es die folgenden Schritte umfasst:

- Filtern der Abwässer zum Entfernen des festen Rückstands;
- Aufkonzentrieren der so aufbereiteten Abwässer, um einen Teil des vorhandenen Wassers zu entfernen;
- Erwärmen und Eindampfen der so aufbereiteten Abwässer;
- Reformieren der Abwässer in einem Reformer mit Katalysebett;
- Abtrennen des Wassers aus dem Strom, der aus dem Reformer austritt, mittels Kondensation; und
- gegebenenfalls Wärmerückgewinnung;

wobei am Auslass ein gasförmiger Strom erhalten wird, der aus Wasserstoff, $CO_2$, Methan, CO und weiteren Bestandteilen besteht.

2. Verfahren nach Anspruch 1, **dadurch gekennzeichnet, dass** die Reformierungsreaktionen in einem Reformer mit Membran durchgeführt werden, in welchem die Reformierungsreaktionen und die Abtrennung des erzeugten Wasserstoffs gleichzeitig ablaufen, sodass nach der mittels Kondensation erfolgenden Abtrennung des Wassers aus dem Strom, der aus dem Reformer austritt, ein wasserstofffreier, gasförmiger Strom erhalten wird.

3. Verfahren nach Anspruch 2, **dadurch gekennzeichnet, dass** im Membranreaktor dichte Metallmembranen eingesetzt werden, die den Wasserstoff selektiv aus den Mischungen in der gasförmigen Phase abtrennen können.

4. Verfahren zur Aufbereitung von Abwässern aus Olivenölmühlen nach Anspruch 1, **dadurch gekennzeichnet, dass** die Reformierungsreaktionen in einem Reformer, dem das Methan zugeführt wird, durchgeführt werden, wobei das umgesetzte Wasser aus den Abwässern selbst besteht, die dem Reformer unmittelbar nach dem Filtern zugeführt werden, wobei der Schritt des Aufkonzentrierens nicht notwendig ist.

5. Verfahren nach einem der vorangegangenen Ansprüche, **dadurch gekennzeichnet, dass** der Einsatz eines Heizkessels zur Verbrennung der in der Ölmühle erzeugten Trester vorgesehen ist, sodass die hierbei erzeugte Wärme in die Verfahrensschritte der Wärmerückgewinnung eingebunden werden kann.

6. Verfahren nach Anspruch 5, **dadurch gekennzeichnet, dass** die bei der Verbrennung der Trester erzeugte Wärme zum Erwärmen und Eindampfen der Abwässer sowie, wenn eine Dampfreformierung durchgeführt wird, teilweise auch zur Aufrechterhaltung der Reformierungsreaktionen und im Schritt des Aufkonzentrierens der Abwässer eingesetzt wird.

**7.** Verfahren nach Anspruch 1, **dadurch gekennzeichnet, dass** der aus Wasserstoff, $CO_2$, Methan, CO und weiteren Bestandteilen bestehende, gasförmige Strom dazu eingesetzt wird, der Prozessapparatur Wärme zuzuführen.

**8.** Verfahren nach Anspruch 1, **dadurch gekennzeichnet, dass** der aus Wasserstoff, $CO_2$, Methan, CO und weiteren Bestandteilen bestehende, gasförmige Strom zur Erzeugung von elektrischer Energie eingesetzt wird.

**9.** Verfahren nach Anspruch 2, **dadurch gekennzeichnet, dass** der aus $CO_2$, Methan, CO und weiteren Bestandteilen bestehende, gasförmige Strom dazu eingesetzt wird, der Prozessapparatur Wärme zuzuführen.

**10.** Verfahren nach Anspruch 2, **dadurch gekennzeichnet, dass** der aus $CO_2$, Methan, CO und weiteren Bestandteilen bestehende, gasförmige Strom zur Erzeugung von elektrischer Energie eingesetzt wird.

**11.** Verfahren nach einem der vorangegangenen Ansprüche, **dadurch gekennzeichnet, dass** die Abwässer, die als Strom zugeführt werden können, aus Abwässern bestehen, die bereits in einem anderen Verfahren aufbereitet wurden.

**12.** Anlage zur Aufbereitung von Abwässern aus Olivenölmühlen, **dadurch gekennzeichnet, dass** sie aufweist:

- eine Station zum Filtern der Abwässer zum Entfernen des festen Rückstands;
- eine Vorrichtung zum Aufkonzentrieren der bereits gefilterten Abwässer, um eine wässrige Lösung mit einem aufkonzentrierten, organischen Anteil zu erhalten, die als Strom zugeführt werden kann;
- eine Einrichtung zum Erwärmen und Eindampfen des zugeführten Stroms;
- einen Katalysebettreaktor, in welchem die Reaktionen des Dampf-Reformierens oder des oxidativen Reformierens und die Wassergas-Shift-Reaktion zeitgleich ablaufen;
- einen Wärmetauscher zum Rückgewinnen der Wärme aus dem gasförmigen Strom, der aus dem Katalysebettreaktor austritt; und
- eine Kondensationsvorrichtung zum Abtrennen des Wassers aus dem gasförmigen Strom, der aus dem Wärmetauscher austritt.

**13.** Anlage zur Aufbereitung von Abwässern aus Olivenölmühlen nach Anspruch 12, **dadurch gekennzeichnet, dass** die Anlage, wenn der Katalysebettreaktor gegen einen Membranreaktor ausgetauscht wird, aufweist:

- eine Station zum Filtern der Abwässer zum Entfernen des festen Rückstands;
- eine Vorrichtung zum Aufkonzentrieren der bereits gefilterten Abwässer, um eine wässrige Lösung mit einem aufkonzentrierten, organischen Anteil zu erhalten, die als Strom zugeführt werden kann;
- eine Einrichtung zum Eindampfen des zugeführten Stroms;
- den Membranreaktor, in welchem die Reformierungsreaktionen und die Abtrennung des erzeugten Wasserstoffs zeitgleich ablaufen;
- einen Wärmetauscher zum Rückgewinnen der Wärme aus dem wasserstofffreien, gasförmigen Strom, der aus dem Membranreaktor austritt; und
- eine Kondensationsvorrichtung zum Abtrennen des Wassers aus dem gasförmigen Strom, der aus dem Wärmetauscher austritt.

**14.** Anlage zur Aufbereitung von Abwässern aus Olivenölmühlen nach Anspruch 12, **dadurch gekennzeichnet, dass**, wenn das Methan in dem Katalysebettreaktor reformiert wird, Einrichtungen vorgesehen sind, mit denen die Abwässer nach der Filterstation direkt dem Reformer zugeführt werden können.

**Revendications**

**1.** Procédé de traitement des eaux résiduelles de moulins à huile d'olive, **caractérisé en ce qu'**il comprend les étapes suivantes :

- le filtrage des eaux résiduelles pour l'enlèvement du résidu fixé ;
- la concentration des eaux résiduelles ainsi traitées pour éliminer une partie de l'eau présente ;
- le chauffage et l'évaporation des eaux résiduelles ainsi traitées ;

- le reformage sur un reformeur à lit catalytique desdites eaux résiduelles ;
- la séparation par condensation de l'eau à partir du courant quittant le reformeur ; et
- la récupération de chaleur éventuelle ;

en obtenant en sortie un courant gazeux constitué d'hydrogène, de $CO_2$, de méthane, de CO et d'autres composés.

2. Procédé selon la revendication 1, **caractérisé en ce que** les réactions de reformage se produisent dans un reformeur à membrane qui exécute simultanément les réactions de reformage et la séparation de l'hydrogène produit, en obtenant ainsi, après séparation par condensation de l'eau à partir du courant quittant le reformeur, un courant gazeux exempt d'hydrogène.

3. Procédé selon la revendication 2, **caractérisé en ce que** ledit réacteur à membrane utilise des membranes métalliques denses capables de séparer de manière sélective l'hydrogène à partir de mélanges dans la phase gazeuse.

4. Procédé de traitement des eaux résiduelles de moulins à huile d'olive selon la revendication 1, **caractérisé en ce que** les réactions de reformage se produisent dans un reformeur alimenté en méthane, où l'eau de réaction est constituée par les eaux résiduelles elles-mêmes qui sont envoyées au reformeur immédiatement après la filtration, l'opération de concentration n'étant pas nécessaire.

5. Procédé selon les revendications précédentes, **caractérisé en ce qu'**il prévoit l'utilisation d'une chaudière pour la combustion des grignons produits par le moulin à huile de manière à intégrer la chaleur ainsi produite dans des phases de récupération de chaleur du procédé.

6. Procédé selon la revendication 5, **caractérisé en ce que** la chaleur produite par la combustion des grignons est utilisée pour le chauffage et la vaporisation des eaux résiduelles et également en partie pour soutenir la réaction de reformage dans le cas d'un reformage de vapeur et pour l'étape de concentration des eaux résiduelles.

7. Procédé selon la revendication 1, **caractérisé en ce que** le courant gazeux constitué d'hydrogène, de $CO_2$, de méthane, de CO et d'autres composés est utilisé pour fournir de la chaleur à l'équipement de procédé.

8. Procédé selon la revendication 1, **caractérisé en ce que** le courant gazeux constitué d'hydrogène, de $CO_2$, de méthane, de CO et d'autres composés est utilisé pour produire de l'énergie électrique.

9. Procédé selon la revendication 2, **caractérisé en ce que** le courant gazeux constitué de $CO_2$, de méthane, de CO et d'autres composés est utilisé pour fournir de la chaleur à l'équipement de procédé.

10. Procédé selon la revendication 2, **caractérisé en ce que** le courant gazeux constitué de $CO_2$, de méthane, de CO et d'autres composés est utilisé pour produire de l'énergie électrique.

11. Procédé selon l'une quelconque des revendications précédentes, **caractérisé en ce que** les eaux résiduelles utilisables comme courant d'alimentation sont constitués par des eaux résiduelles déjà traitées suivant d'autres procédés.

12. Installation de traitement des eaux résiduelles de moulins à huile d'olive, **caractérisée en ce qu'**elle comprend :

une station pour le filtrage des eaux résiduelles pour l'enlèvement du résidu fixé ;
un appareil pour la concentration des eaux résiduelles, une fois filtrées, de manière à obtenir une solution aqueuse avec une fraction organique concentrée utilisable comme courant d'alimentation ;
un dispositif pour le chauffage et la vaporisation dudit courant d'alimentation ;
un réacteur avec lit catalytique qui exécute des réactions de reformage à la vapeur ou de reformage oxydatif conjointement à la réaction de conversion du gaz à l'eau ;
un échangeur de chaleur pour la récupération de la chaleur du courant gazeux quittant le réacteur à lit catalytique ; et
un appareil de condensation pour séparer l'eau du courant gazeux quittant l'échangeur de chaleur.

13. Installation de traitement des eaux résiduelles de moulins à huile d'olive selon la revendication 12, **caractérisée en ce que**, quand le réacteur à lit catalytique est remplacé par un réacteur à membrane, ladite installation comprend :

une station pour le filtrage des eaux résiduelles pour l'enlèvement du résidu fixé ;

un appareil pour la concentration des eaux résiduelles, une fois filtrées, de manière à obtenir une solution aqueuse avec une fraction organique concentrée utilisable comme courant d'alimentation ;

un dispositif pour la vaporisation dudit courant d'alimentation ;

ledit réacteur à membrane, qui exécute simultanément les réactions de reformage et la séparation de l'hydrogène produit ;

un échangeur de chaleur pour la récupération de la chaleur du courant gazeux exempt d'hydrogène quittant le réacteur à membrane ; et

un appareil de condensation pour séparer l'eau du courant gazeux quittant l'échangeur de chaleur.

14. Installation de traitement des eaux résiduelles de moulins à huile d'olive selon la revendication 12, **caractérisée en ce que**, dans le cas où le reformage de méthane se produit dans le réacteur à lit catalytique, des moyens sont prévus pour envoyer les eaux résiduelles directement au reformeur après la station de filtrage.

FIG. 1

FIG. 2

FIG. 3

16

REM

F

olive mill
waste waters

| FILTERING | → | HEATING VAPORIZATION | → | MEMBRANE REFORMER | → H$_2$ |

Q$_1$

O$_2$
( AIR )   Q$_2$   METHANE

RV

FIXED RESIDUE

HEAT RECOVERY   Q$_3$

RT

WATER SEPARATION   SA

WATER

CO$_2$
(CH$_4$, CO, ecc.)

FIG. 4

NITROGEN FOR FLUSHING

REM

CO$_2$
(CO,CH$_4$, ecc.)

distillate of
olive mill
waste waters

H$_2$   H$_2$

H$_2$   H$_2$

PD-AG PIPE

CATALYST

NITROGEN FOR FLUSHING
+
PERMEATED HYDROGEN

FIG. 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 1351673 A, Pizzichini and Russo
- EP 1184125 A
- EP 01830465 A
- EP 1829821 A
- WO 2005000399 A
- WO 00013359558 A

### Non-patent literature cited in the description

- **EKIN KIPÇAK et al.** *The Journal of Supercritical Fluids,* 2011, vol. 57, 50-57
- *THE JOURNAL OF SUPERCRITICAL FLUIDS,* 2012, vol. 69, 57-63
- **E. BONARI ; N. SILVESTRI ; L. ERCOLI.** *Acque di vegetazione dei frantoi oleari, Utilizzazione agronomica dei reflui agro-alimentari (Waste waters of oil mills, Agronomic use of waste coming from the agricultural and foodstuff industry) - ETS,* 2008, 65-80
- **C. AMARAL ; M.S. LUCAS ; J. COUTINHO ; A.L. CRESPI ; M.DR. ANJOS ; C. PAIS.** Microbiological and physicochemical characterization of olive mill wastewaters from a continuous olive mill in North-eastern Portugal. *Bioresource Technology,* 2008, vol. 99, 7215-7223
- **A. COZ ; M. VILLEGAS ; A. ANDRES ; J.R. VIGURI ; D. MANTZAVINOS ; N.P. XEKOUK-OULOTAKIS.** Management scenarios for olive oil mill waste based on characterization and leaching tests. *J. Chem. Technol. Biotechnol.,* 2011
- **P. PARASKEVA ; E. DIAMADOPOULOS.** Technologies for olive mill wastewater (OMW) treatment: a review. *J. Chem. Technol. Biotechnol.,* 2006, vol. 81, 1475-1485
- **M. HAMDI ; J. L. GARCIA ; R. ELLOUZ.** Integrated biological process for olive mill wastewater treatment. *Bioprocess Engineering,* 1992, vol. 8, 79-84
- Utilizzazione dei Reflui Oleari Bioconversioni mediante Fermentazione e Compostaggio di Acque di Vegetazione per la produzione di Bio-Fertilizzanti (Use of Oil Waste - Bioconversions by Fermentation and Composting of Waste Waters for the Production of Bio-Fertilizers). **M. TACCARI.** Doctorate Thesis. Università Politecnica delle Marche, 2008
- **P.S. BLIKA ; K. STAMATELATOU ; M. KORNADOS ; G. LYBERATOS.** Anaerobic digestion of olive mill wastewater. *Global NEST Journal,* 2009, vol. 11 (3), 364-372
- **C.C. ANASTASIOU ; P. CHRISTOU ; A. MICHAEL ; D. NICOLAIDES ; T.P. LAMBROU.** Approaches to Olive Mill Wastewater Treatment and Disposal in Cyprus. *Environmental Research Journal,* 2011, vol. 5 (2), 49-58
- **A. CHIESURA.** Verso la sostenibilita di filiera: recupero e valorizzazione dei reflui oleari (Towards supply-chain sustainability: recovery and valorization of oil wastes). *L'Officina GBS Soc. Cooperativa, Study funded by Unasco, Reg. (CE) 1331/2004 - Settore 1: Sorveglianza e gestione amministrativa del settore e del mercato dell'olio d'oliva e delle olive da tavola - 1.b Studi di fattibilita (Sector 1: Surveillance and administrative management of the sector and market of olive oil and table olives - 1.b Feasability studies)*
- L.R. N. 37/99: Usi economicamente sostenibili degli scarti e dei sottoprodotti della lavorazione delle olive - Seconda Relazione sull'attivita svolta e risultati ottenuti I anno di progetto (giugno 2007 / maggio 2008). Università Politecnica delle Marche, June 2007
- **S. TOSTI ; A. BASILE ; L. BETTINALI ; F. BORGOGNONI ; F. CHIARAVALLOTI ; F. GAL-LUCCI.** Long-term tests of Pd-Ag thin wall permeator tube. *Journal of Membrane Science,* 2006, vol. 284, 393-397
- **S. TOSTI ; A. BASILE ; F. BORGOGNONI ; V. CAPALDO ; S. CORDINER ; S. DI CAVE ; F. GALLUCCI ; C. RIZZELLO ; A. SANTUCCI ; E. TRAVERSA.** Low temperature ethanol steam reforming in a Pd-Ag membrane reactor - Part 1: Ru-based catalyst. *Journal of Membrane Science,* 2008, vol. 308, 250-257
- **S. TOSTI ; A. BASILE ; F. BORGOGNONI ; V. CAPALDO ; S. CORDINER ; S. DI CAVE ; F. GALLUCCI ; C. RIZZELLO ; A. SANTUCCI ; E. TRAVERSA.** Low-temperature ethanol steam reforming in a Pd-Ag membrane reactor - Part 2. Pt-based and Ni-based catalysts and general comparison. *Journal of Membrane Science,* 2008, vol. 308, 258-263

- **S. TOSTI ; A. BASILE ; L. BETTINALI ; F. BORGOGNONI ; F. GALLUCCI ; C. RIZZELLO.** Design and process study of Pd membrane reactors. *International Journal of Hydrogen Energy,* 2008, vol. 33, 5098-5105
- **S. TOSTI.** Overview of Pd-based membranes for producing pure hydrogen and state of art at ENEA laboratories. *International Journal of Hydrogen Energy,* 2010, vol. 35, 12650-12659
- **DIOGO MENDES ; SILVANO TOSTI ; FABIO BORGOGNONI ; ADÉLIO MENDES ; LUIS M. MADEIRA.** Integrated analysis of a membrane-based process for hydrogen production from ethanol steam reforming. *Catalysis Today,* 2010, vol. 156, 107-117